# EUROPEAN PATENT APPLICATION

(11) **EP 4 084 516 A1**
(43) Date of publication of application: **02.11.2022**
(21) Application number: 19957258.7
(22) Date of filing: 27.12.2019
(51) Int. Cl.: H04W 8/22

(54) **BASE STATION AND WIRELESS COMMUNICATION METHOD**

(71) Applicant: NTT DOCOMO, INC., Chiyoda-Ku Tokyo 100-6150 (JP)
(72) Inventor: TOEDA, Teruaki, Tokyo 100-6150 (JP); MIN, Tianyang, Tokyo 100-6150 (JP); TAKAHASHI, Hideaki, Tokyo 100-6150 (JP); ZUGENMAIER, Alf, Munich (DE)
(74) Representative: Hoffmann Eitle
(86) International application number: PCT/JP2019/051588
(87) International publication number: WO 2021/131066

(57) **Abstract**

Abase station includes a receiving unit that receives a terminal capability from a terminal before a security procedure, and a transmitting unit that transmits, to other nodes, a message that does not include the terminal capability acquired before the security procedure or transmits, to other nodes, the terminal capability together with an information element indicating that the terminal capability acquired before the security procedure is invalid.

## Description

### Technical Field

The present invention relates to a base station and a radio communication method for processing terminal capability acquired before a security procedure.

### Background Art

The 3rd generation partnership project (3GPP) is progressing specification of long term evolution (LTE) and LTE-Advanced (hereinafter, referred to as LTE including LTE-Advanced) for the purpose of further speeding up the LTE, and specification of 5th generation mobile communication system (hereinafter, 5G, referred to as new radio (NR) or next generation (NG)). Furthermore, specifications for mobile communication systems beyond the 5G are also being advanced (sometimes referred to as 6G and beyond 5G, but not limited to these names).

In the LTE and NR, for the UE capability acquired before the activation of the security procedure between the UE and the base station, a method for handling a network (core network (for example, enhanced packet core (EPC), 5GC; 5G core) or base station) is agreed. Specifically, it is agreed that the network does not locally store UE capability acquired before a security procedure for later use except for an unauthorized emergency call, and does not transmit the UE capability to other network entities or network functions (for example, Non Patent Literatures 1 and 2).

### Citation List

### Non Patent Literature

Non Patent Literature 1: "Security of RRC UE capability transfer procedure in EPS", S3-192861, 3GPP TSG-SA WG3 Meeting #96, August, 2019
Not Patent Literature 2: "Security of RRC UE capability transfer procedure in 5GS", S3-192862, 3GPP TSG-SA WG3 Meeting #96, August, 2019

### Summary of Invention

In the above-described technology, the handling in the network is only agreed, and the operation of an access network (radio access network (RAN) or access network (AN)) for complying with such agreement is not clear. Therefore, the UE capability acquired before the security procedure cannot be properly handled.

According to a first aspect, a base station includes a receiving unit that receives a terminal capability from a terminal before a security procedure, and a transmitting unit that transmits, to other nodes, a message that does not include the terminal capability acquired before the security procedure or transmits, to other nodes, a message including the terminal capability together with an information element indicating that the terminal capability acquired before the security procedure is invalid.

According to a second aspect, a radio communication method includes receiving a terminal capability from a terminal before a security procedure, and transmitting, to other nodes, a message that does not include the terminal capability acquired before the security procedure or transmitting, to other nodes, the terminal capability together with an information element indicating that the terminal capability acquired before the security procedure is invalid.

### Brief Description of Drawings

Fig. 1 is an overall schematic configuration diagram of a radio communication system 10.
Fig. 2 is a diagram illustrating UE 200 according to an embodiment.
Fig. 3 is a diagram illustrating a base station 300 according to an embodiment.
Fig. 4 is a diagram for describing an operation of a core network according to an embodiment.
Fig. 5 is a diagram for describing a prerequisite operation according to an embodiment.
Fig. 6 is a diagram for describing operation example 1 according to an embodiment.
Fig. 7 is a diagram for describing operation example 2-1 according to an embodiment.
Fig. 8 is a diagram for describing the operation example 2-1 according to the embodiment.
Fig. 9 is a diagram for describing operation example 2-2 according to an embodiment.
Fig. 10 is a diagram for describing the operation example 2-2 according to the embodiment.
Fig. 11 is a diagram for describing operation example 3 according to an embodiment.
Fig. 12 is a diagram for describing the operation example 3 according to the embodiment.
Fig. 13 is a diagram for describing the operation example 3 according to the embodiment.
Fig. 14 is a diagram illustrating an example of a hardware configuration of UE 200 or a base station 300 according to an embodiment.

### Description of Embodiments

Hereinafter, embodiments will be described with reference to the drawings. Note that the same functions and configurations are denoted by the same or similar reference numerals, and description thereof is omitted as appropriate.

### [Embodiments]

### (1) Overall Schematic Configuration of Radio Communication System

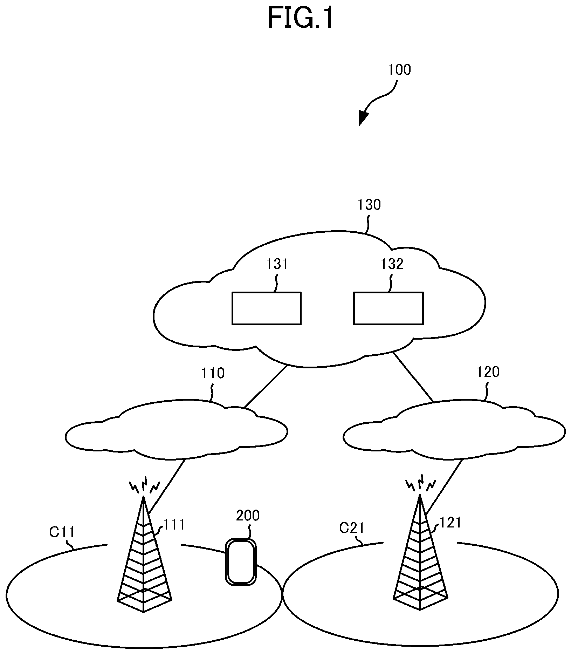

Fig. 1 is an overall schematic configuration diagram of a radio communication system 100 according to an embodiment. The radio communication system 100 is a radio communication system according to long term evolution (LTE) and 5G new radio (NR). Note that the LTE may be referred to as 4G and the NR may be referred to as 5G. The LTE and the NR may be interpreted as a radio access technology (RAT), and in the embodiment, the LTE may be referred to as a first radio access technology and the NR may be referred to as a second radio access technology. The NR may be considered to include radio access technologies beyond 5G.

The radio communication system 100 includes an evolved universal terrestrial radio access network 110 (hereinafter, E-UTRAN 110), a next generation-radio access network 120 (hereinafter, NG RAN 120), and a core network 130. The radio communication system 100 includes a terminal 200.

The E-UTRAN 110 includes an eNB 111 that is the base station according to LTE. The eNB 111 has one or more cells. The E-UTRAN 110 may include two or more eNBs 111.

The NG RAN 120 includes a gNB 121 that is a base station according to 5G (NR). The gNB 121 has one or more cells. The NG RAN 120 may include two or more gNBs 121.

The term "cell" may be used to mean a function of the eNB 111 or the gNB 121, that is, a function of communicating with the terminal 200. The term "cell" may be used to mean a coverage area of the eNB 111 or the gNB 121. Each cell may be distinguished by a frequency used in each cell. The E-UTRAN 110 and the NG RAN 120 (which may be the eNB 111 or the gNB 121) may be simply referred to as a radio access network or an access network.

The eNB 111, the gNB 121, and the terminal 200 may be compatible with carrier aggregation (CA) using a plurality of component carriers (CC), and may be compatible with dual connectivity (DC) that simultaneously transmits component carriers between a plurality of NG-RAN nodes and the terminal 200.

The eNB 111, the gNB 121, and the terminal 200 execute radio communication via a radio bearer. The radio bearer may include a signaling radio bearer (SRB) and a data radio bearer (DRB).

The terminal 200 is not particularly limited, but may be called a "mobile station (MS)" or a "user terminal (UE)". Hereinafter, the terminal 200 will be referred to as the UE 200.

The core network 130 includes an evolved packet core (EPC) according to the LTE and a 5G core according to the 5G (NR). The EPC includes a network node 131 (for example, mobility management entity (MME)) according to the LTE. The 5G core includes a network node 132 (for example, access and mobility management function (AMF)) according to the 5G (NR). The MME and the AMF are network nodes that execute processing related to a control plane. The node may be referred to as a function.

Here, an interface between the eNB 111 and the MME and an interface between the gNB 121 and the MME may be referred to as an S1 interface. The interface between the gNB 121 and the AMF may be referred to as an NG interface or an N2 interface. An interface between the eNB 111 and the eNB 111 and an interface between the eNB 111 and the gNB 121 may be referred to as an X2 interface. The interface between the gNB 121 and gNB 121 may be referred to as an Xn interface. The interface between the MME and the AMF may be referred to as an N26 interface.

### (2) Functional Block Configuration of Terminal

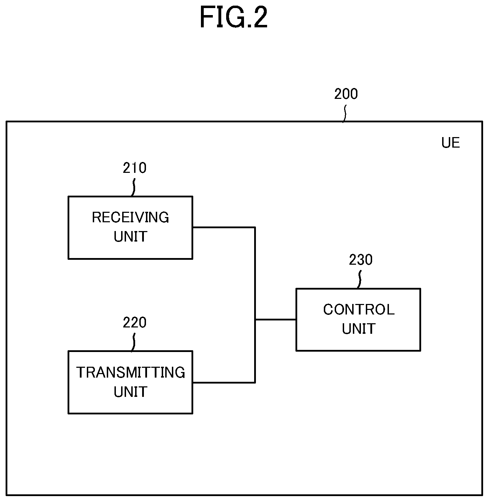

Fig. 2 is a diagram illustrating a functional block configuration of the UE 200 according to the embodiment. As illustrated in Fig. 2, the UE 200 includes a receiving unit 210, a transmitting unit 220, and a control unit 230.

The receiving unit 210 receives various types of information from a network (for example, eNB 111 or gNB 121). For example, the receiving unit 210 may receive a message (for example, RRC Connection Setup) used in an RRC connection setup procedure, a message (for example, UE Capability Enquiry) used in a terminal capability transfer procedure, and a message (for example, Security Mode Command) used in a security procedure.

Although an example of a message according to the LTE is shown here, the receiving unit 210 may receive a message according to the 5G (NR). In such a case, a name of the message according to LTE may be replaced with a name of the message according to the 5G (NR) as necessary.

The transmitting unit 220 transmits various types of information from the network (for example, eNB 111 or gNB 121). For example, the transmitting unit 220 may transmit a message (for example, RRC Connection Request) used in the RRC connection setup procedure, a message (for example, UE Capability Information) used in a terminal capability transfer procedure, and a message (for example, Security Mode Command) used in a security procedure.

Although an example of a message according to the LTE is shown here, the transmitting unit 220 may receive a message according to the 5G (NR). In such a case, a name (for example, RRC Connection Setup) of the message according to the LTE may be replaced with a name (for example, RRC Setup Request) of the message according to the 5G(NR) as necessary.

The control unit 230 controls an operation of the UE 200. For example, the control unit 230 may execute a measurement report used in cell (re)selection. The cell (re)selection may involve handover between base stations. The control unit 230 may also be related to an unauthorized emergency call executed before the security procedure.

### (3) Functional Block Configuration of Base Station

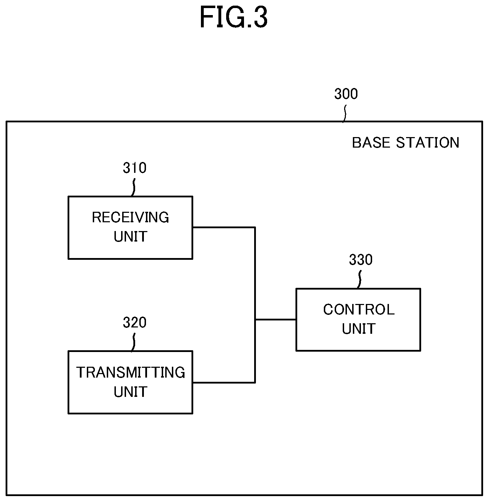

Fig. 3 is a diagram illustrating a functional block configuration of the base station 300 according to an embodiment. In the embodiment, the above-described eNB 111 and gNB 121 may have the same configuration. Therefore, the base station 300 will be described without distinguishing between the eNB 111 and the gNB 121. As illustrated in Fig. 3, the base station 300 includes a receiving unit 310, a transmitting unit 320, and a control unit 330.

The receiving unit 310 receives various types of information from the UE 200. For example, the receiving unit 310 may receive a message (for example, RRC Connection Request) used in the RRC connection setup procedure, a message (for example, UE Capability Information) used in a terminal capability transfer procedure, and a message (for example, Security Mode Complete) used in the security procedure.

The receiving unit 310 receives various types of information from an upper node. For example, the receiving unit 310 may receive a message (for example, Initial Context Setup Request) used in an S1 connection setup procedure.

Although an example of the message according to the LTE is shown here, the receiving unit 310 may receive the message according to the 5G (NR). In such a case, a name of the message according to LTE may be replaced with a name of the message according to the 5G (NR) as necessary.

The transmitting unit 320 transmits various types of information to the UE 200. For example, the transmitting unit 320 may transmit a message (for example, RRC Connection Setup) used in the RRC connection setup procedure, a message (for example, UE Capability Enquiry) used in a terminal capability transfer procedure, and a message (for example, Security Mode Command) used in the security procedure.

The transmitting unit 320 transmits various types of information to the upper node. The upper node includes one of the above-described MME and AMF. For example, the transmitting unit 320 may transmit a message (for example, UE Capability Info Indication) used in the S1 connection setup procedure.

Although an example of the message according to the LTE is shown here, the receiving unit 310 may receive the message according to the 5G (NR). In such a case, a name (for example, UE Capability Info Indication) of the message according to the LTE may be replaced with a name (for example, UE Radio Capability Info Indication) of the message according to the 5G(NR) as necessary.

The control unit 330 controls an operation of the base station 300. For example, the control unit 330 executes control related to the cell (re)selection and the handover.

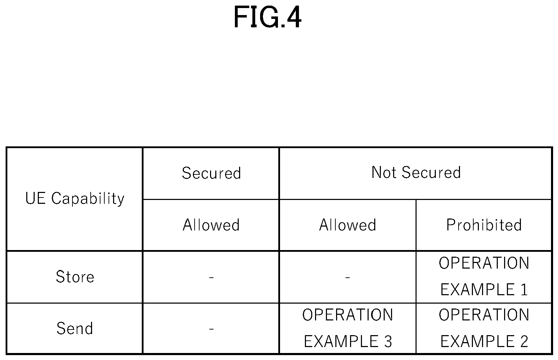

In the embodiment, the control unit 330 handles the UE capability according to the operation of the network regarding the handling of the terminal capability (hereinafter, UE capability) of the UE 200. Specifically, as the operation of the network related to the UE capability, variation illustrated in Fig. 4 can be considered.

In Fig. 4, "Store" means retaining the UE capability in the network. "Send" means transmitting the UE capability to other nodes in the network. "Secured" means that the UE capability is acquired by the base station 300 after the security procedure. "Not secured" means that the UE capability is acquired by the base station 300 before the security procedure. "Allowed" means that "Store" or "Send" is allowed in the upper node of the core network. "Prohibited" means that "Store" or "Send" is prohibited in the upper node of the core network.

Under such a background, both the "Store" and "Send" are allowed for the UE capability acquired after the security procedure, and the base station 300 is not required to perform special operations for the conventional procedure. Similarly, when the "Store" is allowed for the UE capability acquired before the security procedure, the base station 300 is not required to perform special operations for the conventional procedure. Therefore, description of these operations will be omitted.

That is, in the embodiment, the operation (operation example 1) of the base station 300 in the case where the "Store" is prohibited for the UE capability acquired before the security procedure in the network, the operation (operation example 2) of the base station 300 in the case where the "Send" is prohibited for the UE capability acquired before the security procedure in the network, and the operation (operation example 3) of the base station 300 in the case where the "Send" is allowed for the UE capability acquired before the security procedure in the network will be described.

### (4) Prerequisite Operation

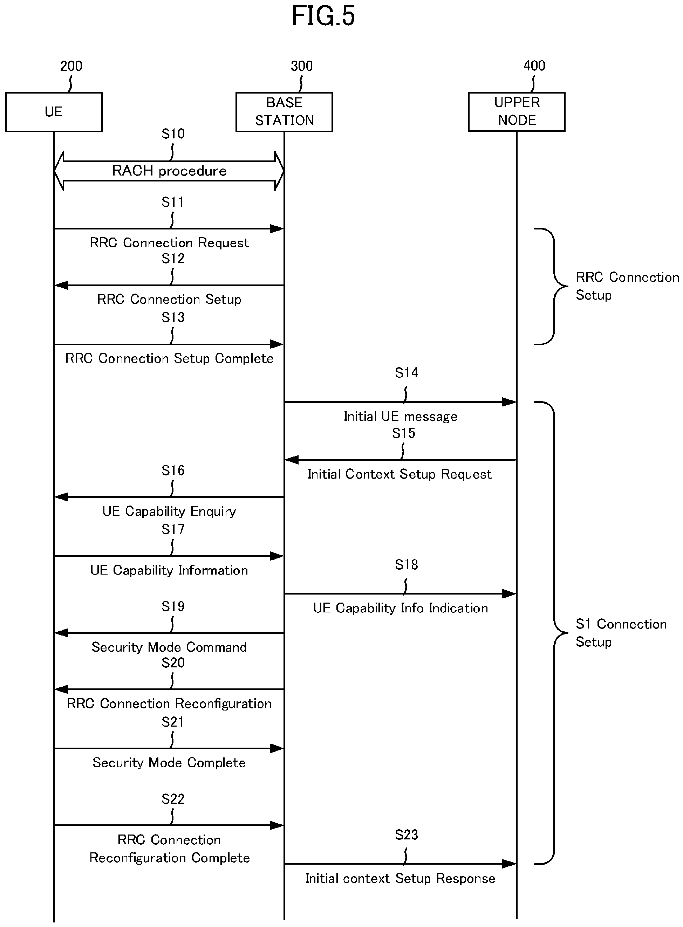

In the following, the prerequisite operation of the above-described operation examples 1 to 3 will be described. Fig. 5 is a diagram illustrating a prerequisite operation according to the embodiment. Here, the operation according to the LTE is mainly described, but the operation according to the 5G (NR) is also the same. In the following, the above-described MME and AMF are collectively called an upper node 400.

As illustrated in Fig. 5, the RACH procedure is executed between the UE 200 and the base station 300 in step S10. The RACH procedure is a procedure for establishing synchronization between the UE 200 and the base station 300 by transmitting a RACH preamble from the UE 200 to the base station 300.

In step S11, the UE 200 transmits the RRC Connection Request to the base station 300, in step S12, the base station 300 transmits the RRC Connection Setup to the UE 200, and in step S13, the UE 200 transmits RRC Connection Setup Complete to the base station 300. These procedures may be referred to as the RRC connection setup procedure (see chapter 5.3.3 in TS36.331 v15.7.0 or chapter 5.3.3 in TS36.331 v15.7.0).

In step S14, the base station 300 transmits an Initial UE message to the upper node 400. In step S15, the upper node 400 transmits an Initial Context Setup Request to the base station 300. The operation of step S15 is an operation of starting the S1 connection setup (chapter 8.3 in TS36.413 v15.7.1, chapter 8.3 in TS38.413 v15.5.0).

In step S16, the base station 300 transmits the UE capability enquiry to the UE 200. In step S17, the UE 200 transmits the UE Capability Information to the base station 300. The UE Capability Information includes at least UE capability of the UE 200. These procedures may be referred to as a UE capability transfer procedure (see chapter 5.6.3 in TS36.331 v15.7.0 or chapter 5.6.1 in TS36.331 v15.7.0).

In step S18, the base station 300 transmits UE Capability Info Indication to the upper node 400. The UE Capability Info Indication includes at least UE capability of the UE 200 (chapter 8.9 in TS36.413 v15.7.1, chapter 8.14.1 in TS38.413 v15.5.0).

In step S19, the base station 300 transmits the Security Mode Command to the UE 200, and in step S20, the base station 300 transmits RRC Connection Reconfiguration to the UE 200. In step S21, the UE 200 transmits the Security Mode Command to the base station 300, and in step S22, the UE 200 transmits RRC Connection Reconfiguration complete to the base station 300. The processes of steps S19 and S20 may be referred to as the security procedure (see chapter 5.3.4 in TS36.331 v15.7.0 or chapter 5.3.4 in TS36.331 v15.7.0). The security procedure may be referred to as an access-stratum (AS) security procedure.

In step S23, the base station 300 transmits an Initial Context Setup Response to the upper node 400. The operation of step S23 is an operation of completing the S1 connection setup (chapter 8.3 in TS36.413 v15.7.1, chapter 8.3 in TS38.413 v15.5.0).

As described above, the embodiment premises the case where the UE capability is acquired before the security procedure between the UE 200 and the base station 300.

### (5) Operation Example 1

Hereinafter, operation example 1 according to the embodiment will be described. As described above, the operation example 1 is the operation of the base station 300 in the case where the "Store" is prohibited for the UE capability acquired before the security procedure in the network.

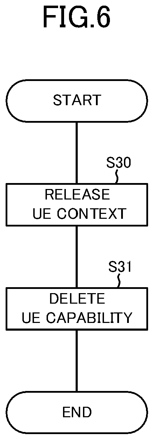

As illustrated in Fig. 6, in step S30, the base station 300 detects a release of the UE context regarding the UE 200 that has transmitted the UE capability before the security procedure. The release of the UE context may be detected when the UE 200 that has transmitted the UE capability before the security procedure transits from RRC Connected to RRC Idle or RRC Inactive. The release of the UE context may be detected when the UE 200 that has transmitted the UE capability before the security procedure performs the handover. The release of the UE context may be detected when the UE 200 that has transmitted the UE capability before the security procedure performs the cell reselection. The release of the UE context may be detected when the radio quality of the UE 200 that has transmitted the UE capability deteriorates (when the UE 200 notifies radio link failure, when the base station determines the UE 200 to be the radio link failure, or the like).

In step S31, the base station 300 eliminates the UE capability acquired before the security procedure. In other words, the base station 300 retains the UE capability while the UE 200 that has transmitted the UE capability before the security procedure is in the RRC Connected, and eliminates the UE capability when the UE 200 transits to the RRC Idle or the RRC Inactive.

Here, the UE capability acquired before the security procedure may be the UE capability acquired in cases other than the unauthorized emergency call. The UE capability acquired before the security procedure may be the UE capability for the UE 200 (for example, NB (Narrow Band) IoT UE) that uses a narrow band. That is, the base station 300 may execute a process of S31 when the UE capability acquired before the security procedure is one acquired in the cases other than the unauthorized emergency call. The base station 300 may perform the process of S31 when the UE capability acquired before the security procedure is the UE capability for the UE 200 (for example, NB IoT UE) that uses the narrow band.

With such a configuration, in the case where the UE capability acquired before the security procedure in the network is prohibited from being retained for later use, it is possible to suppress the situation in which the base station 300 continues to retain the UE capability.

Note that the base station 300 may receive the UE capability from the UE 200 after the security procedure. In such a case, the base station 300 may retain the UE capability acquired after the security procedure without eliminating the UE capability, even when the UE context is released.

### (6) Operation Example 2

Hereinafter, operation example 2 according to the embodiment will be described. As described above, the operation example 2 is the operation of the base station 300 in the case where the "Send" is prohibited for the UE capability acquired before the security procedure in the network. As such an operation of the base station 300, the following operation example 2-1 and operation example 2-2 can be considered.

### (Operation Example 2-1)

The operation example 2-1 will be described below. The operation example 2-1 illustrates a case where the UE 200 that has transmitted the UE capability before the security procedure performs the handover.

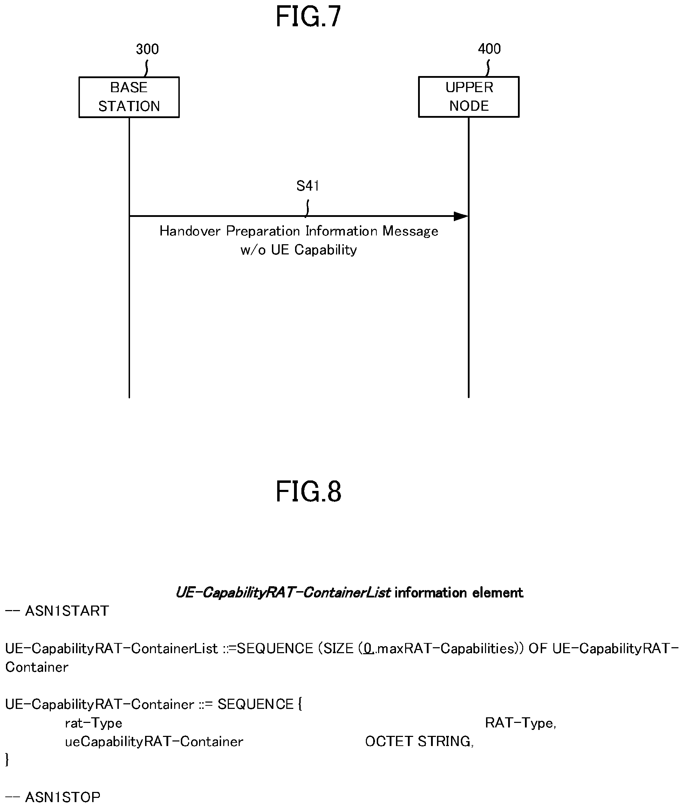

As illustrated in Fig. 7, in step S41, the base station 300 transmits a message related to handover to the upper node 400. The message related to the handover may include a Handover Preparation Information Message. Here, the Handover Preparation Information Message does not include the UE capability acquired before the security procedure. That is, in step S41, the base station 300 transmits to the upper node 400 the message that does not include the UE capability acquired before the security procedure.

The message related to the handover may include HANDOVER REQUIRED and HANDOVER REQUEST used in the S1 interface (see chapter 8.4 in TS36.413 v15.7.1), and HANDOVER REQUIRED and HANDOVER REQUEST used in the N2 interface (see Chapter 8.4 in TS38.413 v15.5.0). The message related to the handover may include HANDOVER REQUEST and RETRIEVE UE CONTEXT RESPONSE used in the X2 interface (chapter 8.2 and chapter 8.3 in TS36.423 v15.7.0), and HANDOVER REQUEST and RETRIEVE UE CONTEXT RESPONSE used in the Xn interface (chapter 8.2 in TS38.423 V15.5.0).

For example, the Handover Preparation Information Message may include the UE-CapabilityRAT-ContainerList information element illustrated in Fig. 8. In such a case, the base station 300 sets a sequence length (SIZE) of the UE-CapabilityRAT-ContainerList to be "0", and as a result, may transmit to the upper node 400 the message that does not include the UE capability acquired before the security procedure. Such an information element having the sequence length (SIZE) set to be "0" is an example of the information element indicating that the UE capability acquired before the security procedure is not included.

Here, the UE capability acquired before the security procedure may be the UE capability acquired in cases other than the unauthorized emergency call. The UE capability acquired before the security procedure may be the UE capability for the UE 200 (for example, NB IoT UE) that uses the narrow band. That is, the base station 300 may execute a process of S41 when the UE capability acquired before the security procedure is one acquired in the cases other than the unauthorized emergency call. The base station 300 may perform the process of S41 when the UE capability acquired before the security procedure is the UE capability for the UE 200 (for example, NB IoT UE) that uses the narrow band.

With such a configuration, when the UE capability acquired before the security procedure is prohibited from being transmitted in the network, it is possible to avoid the situation in which the UE capability acquired before the security procedure is transmitted from the base station 300.

Note that the base station 300 may receive the UE capability from the UE 200 after the security procedure. In such a case, the base station 300 may transmit the message including the UE capability acquired after the security procedure to the upper node 400.

### (Operation Example 2-2)

The operation example 2-2 will be described below. The operation example 2-2 illustrates a case where the UE 200 that has transmitted the UE capability before the security procedure performs the handover.

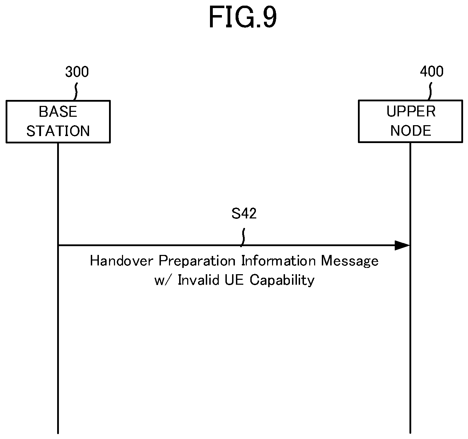

As illustrated in Fig. 9, in step S42, the base station 300 transmits the message related to the handover to the upper node 400. The message related to the handover may include a Handover Preparation Information Message. Here, the Handover Preparation Information Message includes an information element indicating that the UE capability is invalid, in addition to the UE capability acquired before the security procedure. That is, in step S42, the base station 300 transmits, to the upper node 400, the message including the UE capability together with the information element indicating that the UE capability acquired before the security procedure is invalid.

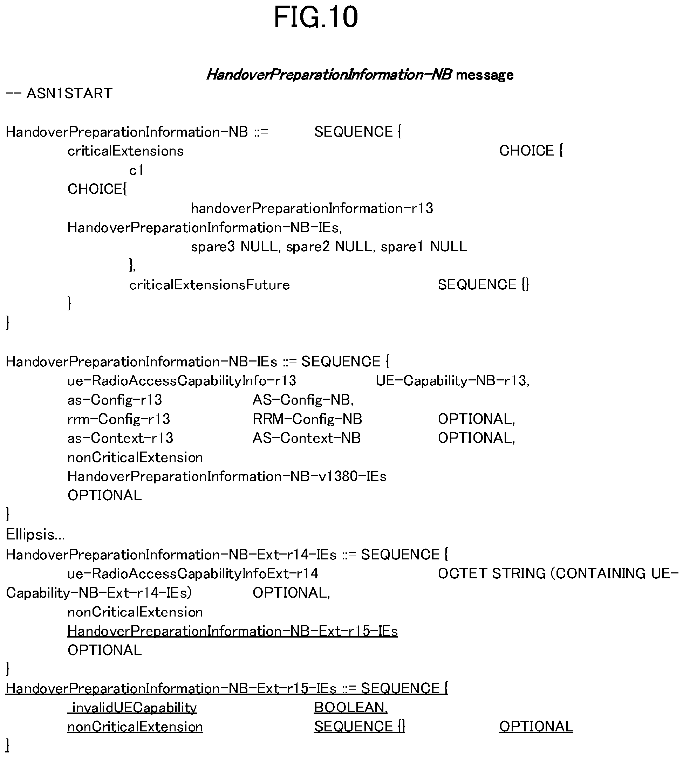

For example, the Handover Preparation Information Message may include the information element "invalidUECapability" as illustrated in Fig. 10. The "invalidUECapability" is an example of the information element indicating that the UE capability acquired before the security procedure is invalid. Note that Fig. 10 illustrates the Handover Preparation Information Message regarding the NB IoT UE.

Here, the UE capability acquired before the security procedure may be the UE capability acquired in cases other than the unauthorized emergency call. The UE capability acquired before the security procedure may be the UE capability for the UE 200 (for example, NB IoT UE) that uses the narrow band. That is, the base station 300 may execute a process of S42 when the UE capability acquired before the security procedure is one acquired in the cases other than the unauthorized emergency call. The base station 300 may perform the process of S42 when the UE capability acquired before the security procedure is the UE capability for the UE 200 (for example, NB IoT UE) that uses the narrow band.

According to such a configuration, in the case where the UE capability acquired before the security procedure is prohibited from being transmitted in the network, even if the UE capability acquired before the security procedure is transmitted from the base station 300, it is possible to understand that the UE capability is invalid in the network, and it is possible to perform a measure such as not transmitting the UE capability in the network.

Furthermore, even for the existing UE that is defined to be essential to transmit the UE capability, it is only necessary to add the information element indicating that UE capability is invalid, so it is possible to reduce the load related to the operation change of the existing UE compared to the operation example 2-1 described above.

Note that the base station 300 may receive the UE capability from the UE 200 after the security procedure. In such a case, the base station 300 may transmit the message including the UE capability acquired after the security procedure to the upper node 400.

### (7) Operation Example 3

Hereinafter, operation example 3 according to the embodiment will be described. As described above, the operation example 3 is the operation of the base station 300 in the case where the "Send" is allowed for the UE capability acquired before the security procedure in the network.

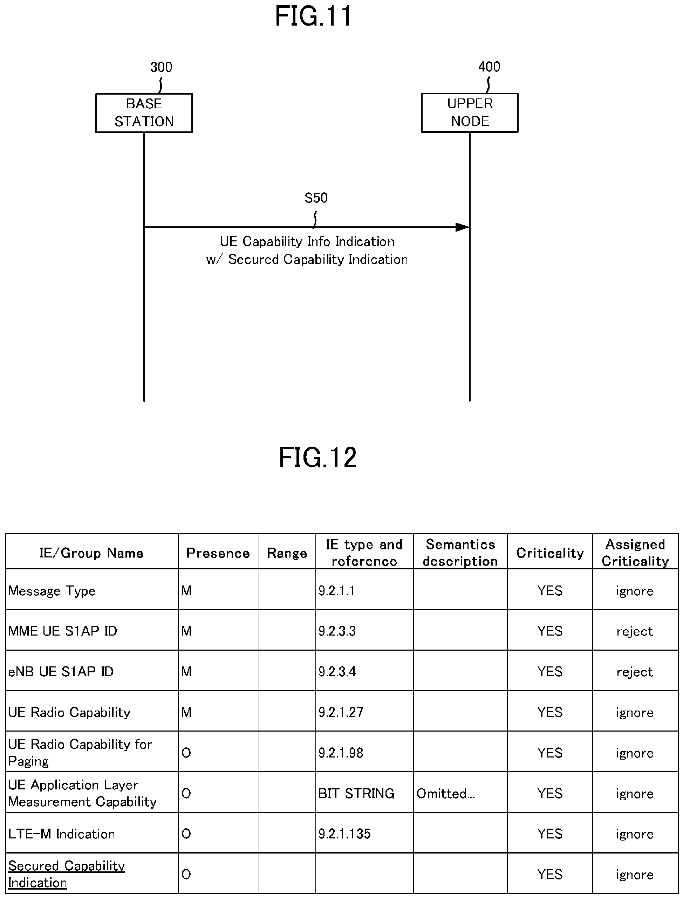

As illustrated in Fig. 11, in step S50, the base station 300 transmits the UE Capability Info Indication to the upper node 400. Such processing is similar to step S18 described in Fig. 5. Here, the UE Capability Info Indication includes the information element indicating whether the UE capability has been acquired before the security procedure.

For example, the UE Capability Info Indication includes the information elements illustrated in Fig. 12 (chapter 9.1.10 in TS36.413 v15.7.1, chapter 9.2.13 in TS38.413 v15.5.0). Here, the UE Capability Info Indication includes "Secured Capability Indication". The "Secured Capability Indication" is an example of the information element indicating whether the UE capability is acquired before the security procedure.

Here, the UE capability acquired before the security procedure may be the UE capability acquired in the case of the unauthorized emergency call. The UE capability acquired before the security procedure may be the UE capability for the UE 200 (for example, NB IoT UE) that uses the narrow band. That is, the base station 300 may execute a process of S50 when the UE capability acquired before the security procedure is one acquired in the case of the unauthorized emergency call. The base station 300 may perform the process of S50 when the UE capability acquired before the security procedure is the UE capability for the UE 200 (for example, NB IoT UE) that uses the narrow band.

With such a configuration, in the case where the "Send" is allowed for the UE capability acquired before the security procedure in the network, it is possible to understand whether the UE capability is acquired before the security procedure in the network, and it is possible to appropriately operate the UE capability for later use.

Although the UE Capability Info Indication is described in the examples illustrated in Figs. 11 and 12, the operation example 3 is not limited thereto. The information element indicating whether the UE capability is acquired before the security procedure may be included in the message related to the handover. The message related to the handover may include a Handover Preparation Information Message.

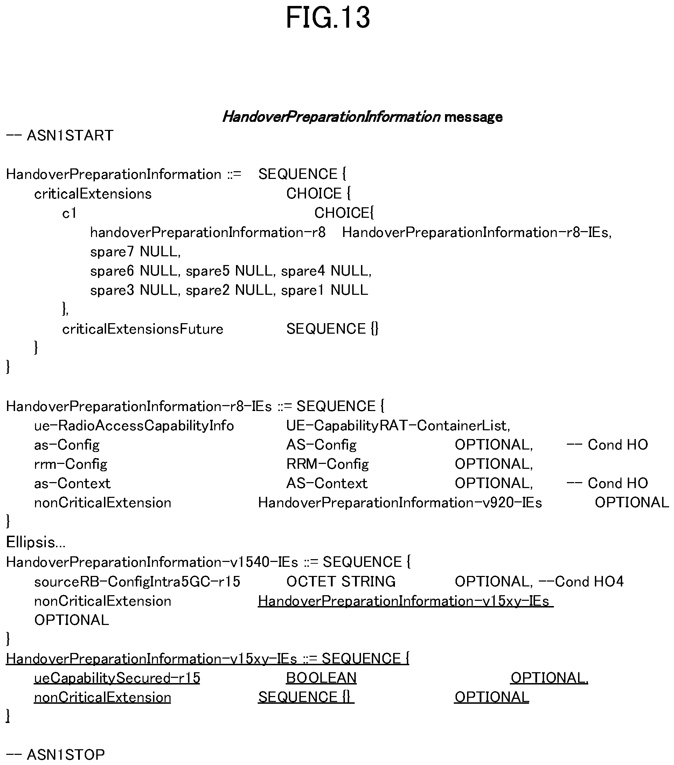

For example, the Handover Preparation Information Message may include an information element "ueCapabilitySecured" as illustrated in Fig. 13. The "ueCapabilitySecured" is an example of the information element indicating whether the UE capability is acquired before the security procedure.

### (8) Action and Effect

In the embodiment, by adopting the operation examples 1 to 3 as the operation of the base station 300, it is possible to provide the base station 300 that can comply with the agreement of the network.

### [Other Embodiments]

The contents of the present invention have been described above according to the embodiments, but the present invention is not limited to these descriptions, and it is obvious to those skilled in the art that various modifications and improvements can be made.

In the above-described operation examples 1 to 3, the interface (especially the S1 interface) between the base station 300 and the upper node 400 has been illustrated. However, the embodiment is not limited thereto. The operation examples 1 to 3 can be applied to other interfaces. For example, the above-described operation examples 1 to 3 can be applied to one or more interfaces selected from the NG(N2) interface, the X2 interface, the Xn interface, the N26 interface, and the like. Therefore, the other nodes to which the message is transmitted are not limited to the upper node 400 such as the MME or the AMF, and may include other base stations
(for example, eNB 111 and gNB 121). Further, the base station 300 is not limited to the base station, and may include the MME, the AMF, or the like.

In the operation example 2 described above, the procedure in the handover of the UE 200 that transmits the UE capability before the security procedure has been illustrated. Such handover may include handover (Intra-RAT handover) within the same access network or may include handover (Inter-RAT handover) between different access networks.

Further, such handover is not limited to the handover, and may include a case (RRC Connection Resume or UE re-establishment) of acquiring UE capability from the upper node or another base station.

In the embodiments described above, the terms "before security procedure" or "after security procedure" are used, but the embodiments are not limited thereto. These terms may be read as the terms "before activation of security procedure" or "after activation of security procedure".

The block configuration diagram (Figs. 2 and 3) used for explaining the embodiments described above illustrates blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include determining, deciding, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as described above, the realization method is not particularly limited to any one method.

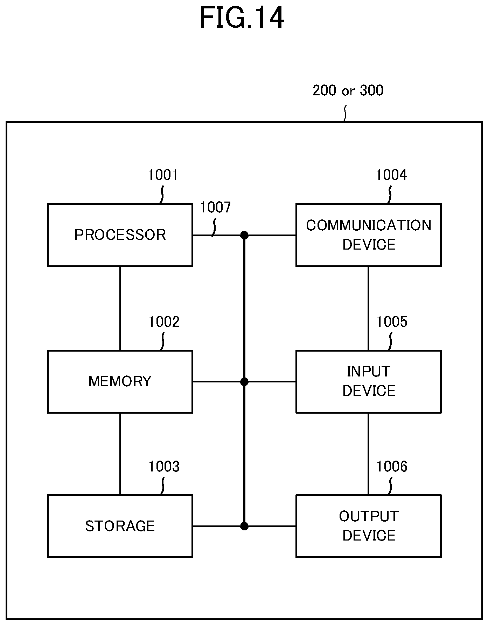

Furthermore, the above-described eNB 111, gNB 121, and UE 200 (the devices) may also function as a computer that performs the processing of the radio communication method of the present disclosure. Fig. 14 is a diagram illustrating an example of a hardware configuration of the device. As illustrated in Fig. 14, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional block (see Fig. 3) of the device can be realized by any of hardware elements of the computer device or a desired combination of the hardware elements.

Moreover, the processor 1001 performs computing by loading predetermined software (computer program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and/or the communication device 1004 into the memory 1002, and executes various processes according to these computer program, software module, and data. As the computer program, a computer program that is capable of executing on the computer at least a part of the operation described in the above embodiments is used. Alternatively, various processes described above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instructions, commands, information, signals, bits, symbols, chips, and the like which may be mentioned throughout the above description may be represented by a voltage, a current, an electromagnetic wave, a magnetic field or magnetic particles, an optical field or photons, or any combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like described in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femto cell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (remote radio head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows communication between a base station and a mobile station to be replaced with communication between a plurality of mobile stations (for example, may be referred to as device-to-device (D2D), vehicle-to-everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The radio frame may be composed of one or a plurality of frames in the time domain. One frame or each of the plurality of frames in the time domain may be referred to as a subframe.

The subframe may be composed of one or a plurality of slots in the time domain. The subframe may also be a fixed time length (for example, 1 ms) that does not depend on numerology.

The numerology may be a communication parameter applied to at least one of transmission and reception of a certain signal or channel. The numerology may indicate at least one of, for example, subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in a time domain, and the like.

The slot may be composed of one or a plurality of symbols (orthogonal frequency division multiplexing (OFDM)) symbols, single carrier frequency division multiple access (SC-FDMA) symbol, and the like in the time domain. The slot may be a time unit based on numerology.

The slot may include a plurality of minislots. Each minislot may be composed of one or a plurality of symbols in the time domain. In addition, the minislot may be referred to as a sub-slot. The minislot may be configured with a smaller number of symbols than that of the slot. A PDSCH (or PUSCH) transmitted in a time unit larger than a minislot may be referred to as a PDSCH (or PUSCH) mapping type A. A PDSCH (or PUSCH) transmitted using a minislot may be referred to as a PDSCH (or PUSCH) mapping type B.

All of the radio frame, the subframe, the slot, the minislot, and the symbol represent time units at the time of transmitting a signal. The radio frame, the subframe, the slot, the minislot, and the symbol may have different names corresponding thereto, respectively.

For example, one subframe may be referred to as a transmission time interval (TTI), a plurality of consecutive subframes may be referred to as TTI, and one slot or one minislot may be referred to as TTI. That is, at least one of the subframe and the TTI may be a subframe (1 ms) in the existing LTE, a period (for example, 1 to 13 symbols) shorter than 1 ms, or a period longer than 1 ms. Note that a unit representing TTI may be called a slot, a minislot, or the like instead of a subframe.

Here, the TTI refers to, for example, a minimum time unit of scheduling in radio communication. For example, in the LTE system, the base station performs scheduling to allocate radio resources (frequency bandwidth, transmission power, and the like that can be used in each user terminal) to each user terminal in units of TTI. Note that the definition of the TTI is not limited thereto.

The TTI may be a transmission time unit such as a channel-encoded data packet (transport block), a code block, and a code word, or may also be a processing unit such as scheduling or link adaptation. Note that when the TTI is given, a time interval (for example, the number of symbols) in which the transport block, the code block, the code word, and the like are actually mapped may be shorter than the TTI.

Note that when one slot or one minislot is referred to as the TTI, one or more TTIs (that is, one or more slots or one or more minislots) may be the minimum time unit of the scheduling. Further, the number of slots (the number of minislots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a minislot, a subslot, a slot, and the like.

Note that the long TTI (for example, normal TTI, subframe, and the like) may be read as a TTI having a time length exceeding 1 ms, and the short TTI (for example, a shortened TTI) may be read as a TTI that is less than the long TTI and has a TTI length of 1 ms or more.

The resource block (RB) is a resource allocation unit in the time domain and the frequency domain, and may include one or a plurality of consecutive subcarriers in the frequency domain. The number of subcarriers included in the RB may be the same regardless of the numerology, for example, 12. The number of subcarriers included in the RB may be determined based on the numerology.

Further, the time domain of the RB may include one or a plurality of symbols, and may have a length of 1 slot, 1 minislot, 1 subframe, or 1 TTI. 1 TTI, one subframe, and the like may be composed of one or a plurality of resource blocks.

Note that one or a plurality of RBs may be referred to as a physical resource block (physical RB: PRB), a sub-carrier group (SCG), a resource element group (REG), a PRB pair, an RB pair, and the like.

In addition, the resource block may be composed of one or a plurality of resource elements (RE). For example, 1 RE may be a radio resource region of one subcarrier and one symbol.

A bandwidth part (BWP) (may be called a partial bandwidth, and the like) may represent a subset of consecutive common resource blocks (RBs) for certain numerology in a certain carrier. Here, the common RB may be specified by an RB index based on a common reference point of the carrier. The PRB may be defined in a certain BWP and numbered within the BWP.

The BWP may include a UL BWP and a DL BWP. One or a plurality of BWPs may be configured in one carrier for the UE.

At least one of the configured BWPs may be active, and it may not be assumed that the UE transmits and receives a predetermined signal/channel outside the active BWP. Note that "cell", "carrier", and the like in this disclosure may be read as "BWP".

The structures of the radio frame, the subframe, the slot, the minislot, the symbol, and the like, described above are merely examples. For example, the configurations of the number of subframes included in a radio frame, the number of slots per subframe or radio frame, the number of minislots included in the slot, the number of symbols and RBs included in the slot or minislot, the number of subcarriers included in the RB, the number of symbols in the TTI, the symbol length, the cyclic prefix (CP) length, and the like can be variously changed.

The terms "connected", "coupled", or any variation thereof means any direct or indirect connection or coupling between two or more elements, and may mean that one or more intermediate elements are provided between two elements "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables and/or printed electrical connections, and as some non-limiting and non-exhaustive examples, by using electromagnetic energy having wavelengths in the radio frequency region, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit", a "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" and "deciding" used in the present disclosure may include a wide variety of motions. The "determining" and "deciding" may include, for example, judging, calculating, computing, processing, deriving, investigating, looking up (search, inquiry) (for example, searching in a table, a database or another data structure), and may include ones regarding ascertaining as the "determining" and "deciding". In addition, the "determining" and "deciding" may include one regarding "receiving" (for example, receiving information), transmitting (for example, transmitting information), an input, an output, accessing (for example, accessing data in memory) as "determining" and "deciding". In addition, the "determining" and "deciding" may include ones regarding ones such as resolving, selecting, choosing, establishing, and comparing as "determining" and "deciding". That is, the "determining" and "deciding" can include considering some operation as performing the "determining" and "deciding". In addition, the "determining (deciding)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

100 Radio communication system
110 E-UTRAN
111 eNB
120 NG RAN
121 gNB 121
130 Core network
200 UE
210 Receiving unit
220 Transmitting unit
230 Control unit
300 Base station
310 Receiving unit
320 Transmitting unit
330 Control unit
400 Upper node
1001 Processor
1002 Memory
1003 Storage
1004 Communication device
1005 Input device
1006 Output device
1007 Bus

## Claims

1. Abase station, comprising:
a receiving unit that receives a terminal capability from a terminal before a security procedure; and
a transmitting unit that transmits, to other nodes, a message that does not include the terminal capability acquired before the security procedure or transmits, to other nodes, a message including the terminal capability together with an information element indicating that the terminal capability acquired before the security procedure is invalid.

2. The base station according to claim 1, wherein
the receiving unit receives the terminal capability from the terminal after the security procedure, and
the transmitting unit transmits the terminal capability acquired after the security procedure to other nodes.

3. The base station according to claim 1 or 2, wherein the terminal capability acquired before the security procedure is terminal capability acquired in a case other an unauthorized emergency call or terminal capability related to a terminal using a narrow band.

4. The base station according to any one of claims 1 to 3, wherein the message is a message related to handover.

5. A radio communication method, comprising:
receiving a terminal capability from a terminal before a security procedure; and
transmitting, to other nodes, a message that does not include the terminal capability acquired before the security procedure or transmitting, to other nodes, the terminal capability together with an information element indicating that the terminal capability acquired before the security procedure is invalid.
